Europäisches Patentamt

European Patent Office

Office européen des brevets

(19)

(11) **EP 0 499 560 B1**

(12) **FASCICULE DE BREVET EUROPEEN**

(45) Date de publication et mention
de la délivrance du brevet:
**07.04.1999 Bulletin 1999/14**

(51) Int Cl.⁶: **H04L 5/06**, H03H 17/06,
H04B 7/005

(21) Numéro de dépôt: **92460002.6**

(22) Date de dépôt: **16.01.1992**

(54) **Dispositif et procédé d'estimation de canal pour un système de transmission "COFDM"**

Anordnung und Verfahren zur Kanalschätzung für COFDM-Übertragungssystem

Channel estimation system and method for COFDM transmission system

(84) Etats contractants désignés:
**DE ES GB IT NL SE**

(30) Priorité: **17.01.1991 FR 9100654**

(43) Date de publication de la demande:
**19.08.1992 Bulletin 1992/34**

(60) Demande divisionnaire: **97117217.6 / 0 820 172**

(73) Titulaires:
• **FRANCE TELECOM**
  **75015 Paris (FR)**
• **TELEDIFFUSION DE FRANCE**
  **75932 Paris Cédex 15 (FR)**

(72) Inventeurs:
• **Castelain, Damien**
  **F-35000 Rennes (FR)**
• **Helard, Jean-François**
  **F-35700 Rennes (FR)**
• **Le Floch, Bernard**
  **F-35000 Rennes (FR)**
• **Rault, Jean-Christophe**
  **F-35700 Rennes (FR)**

(74) Mandataire: **Corlau, Vincent et al**
**c/o Cabinet Vidon,**
**Immeuble Germanium,**
**80 avenue des Buttes de Coesmes**
**35700 Rennes (FR)**

(56) Documents cités:
**EP-A- 0 369 917          US-A- 4 802 109**

• **NACHRICHTENTECHNISCHE ZEITSCHRIFT vol. 27, no. 11, Novembre 1974, ULM, DE pages 425 - 431; W. SCHALLER: 'Verwendung der schnellen Fouriertransformation in digitalen Filtern'**
• **IEEE Global Telecommunications Conference 1989, 27-30 Novembre 1989, Dallas, US; vol. 1 des 3, IEEE New York, US, 1989; pages 423 - 427, Tsusuku et al.: ÿ/ "Mobile teletext reception using signal processing in frequency domain"**
• **International Conference on Acoustics, Speech and Signal Processing, 23 - 26 Mai, 1989; IEEE New York, 1989; Vol. 2, pages 1360 - 1363 R. C. DiPietro: ÿ/ "Suppressing narrow - band interference in PN spread spectrum communications systems"**

## Description

Le domaine de l'invention est celui de la diffusion de données numériques destinées à être reçues notamment par des mobiles circulant en milieu urbain, c'est-à-dire dans des conditions de multipropagation (processus de Rayleigh) engendrant des phénomènes d'évanouissement (fading), et en présence de parasites et de brouillage. Plus généralement, l'invention concerne la diffusion de signaux numériques dans des canaux affectés de trajets multiples dont les caractéristiques varient dans le temps.

L'invention s'applique plus particulièrement, mais non exclusivement, au système de radiodiffusion sonore numérique dénommé système COFDM (Coding Orthogonal Frequency Division Multiplex (Multiplexage de Fréquences Orthogonales Codées)), tel que décrit dans les brevets français 86 09622 du 2 juillet 86, et 86 13271 du 23 septembre 86 au nom des mêmes déposants.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur N voies de diffusion parallèles au moyen d'un multiplex de fréquences utilisant des porteuses orthogonales. En particulier, ce type de modulation permet d'éviter que deux éléments successifs du train de données soient émis à la même fréquence.

Le processus de codage connu vise dans son ensemble à permettre le traitement des échantillons issus du démodulateur pour absorber l'effet des variations d'amplitude du signal reçu, dues au processus de Rayleigh. Le codage est avantageusement un codage convolutif, éventuellement concaténé à un codage du type Reed-Solomon. Le décodage peut être avantageusement un décodage de Viterbi à décision douce.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

La démodulation du signal reçu peut être différentielle ou cohérente.

L'intérêt de la démodulation différentielle réside essentiellement dans sa simplicité de mise en oeuvre et son absence d'inertie après un évanouissement profond. C'est cette approche qui a été utilisée pour valider les principes généraux du système COFDM.

La démodulation cohérente offre, en théorie, une meilleure résistance au bruit que la démodulation différentielle, permettant d'obtenir un gain en performance d'environ 3 dB. Toutefois, il apparaît clairement que, dans des conditions de réception spécifiques aux systèmes de diffusion vers les mobiles en milieu perturbé, il est particulièrement difficile d'extraire du signal modulé une référence de phase et d'amplitude pour chaque porteuse du multiplex. L'erreur faite sur l'estimation des porteuses entraîne donc, dans le cas de la démodulation cohérente, une dégradation sensible des performances. Ceci est d'autant plus vrai dans le cas d'évanouissements profonds et rapides rencontrés lorsque la fréquence porteuse ou la vitesse du véhicule augmente.

En d'autres termes, la démodulation cohérente est en principe plus performante que la démodulation différentielle, mais nécessite que le dispositif de récupération de porteuse puisse fournir une bonne estimation de la réponse fréquentielle du canal à tout instant.

On connaît, par la demande de brevet FR 90 01491, du 06.02.90, au nom des mêmes déposants, un procédé de diffusion à entrelacement temps-fréquence permettant une démodulation cohérente, en prévoyant l'insertion parmi les éléments d'information utiles à transmettre d'éléments de référence de valeur et de position dans l'espace fréquence f- temps t connues des récepteurs.

L'idée de base de ce procédé consiste donc à utiliser certaines porteuses judicieusement réparties dans le domaine temps-fréquence comme fréquences pilotes de référence de phase et/ou d'amplitude. En d'autres termes, on insère parmi les données à transmettre et à des emplacements prédéterminés des mots fixes, servant de référence en amplitude et/ou en phase à la réception.

Ainsi, il est possible de déterminer, par interpolation, une référence de phase et d'amplitude pour chacun des éléments numériques, et donc de réaliser une démodulation cohérente.

Plus précisément, l'estimation de la réponse du canal est obtenue par un filtrage d'interpolation, soit par convolution circulaire, ainsi que cela est décrit dans la demande de brevet FR 90 01491 déjà mentionnée, soit par transformation de Fourier. Cette seconde solution présente l'avantage de nécessiter, à qualité égale, un nombre d'opérations inférieur à la première.

Toutefois, on constate que ces méthodes n'apportent pas en pratique des résultats satisfaisants. En effet, si le gain en faveur de la démodulation cohérente par rapport à la démodulation différentielle est théoriquement de 3 dB lorsque la réponse du canal est estimée de manière parfaite, il n'est en pratique que de l'ordre de 0,5 dB.

Ce mauvais résultat est dû essentiellement au fait que l'estimation de la réponse du canal est fortement entachée de bruit, ce qui nuit à la qualité de l'interpolation.

On connait par ailleurs des techniques de filtrage d'un signal temporel, qui mettent en oeuvre une première FFT pour passer dans le domaine fréquentiel, puis un filtrage (application d'une fenêtre de filtrage) et enfin une seconde FFT pour ramener le signal à traiter dans le domaine temporel. De telles techniques sont par exemple décrites dans les documents "Verwendung der schnellen Fouriertransformation in digitalen Filtern" (W. Schaller, Nachrichtentechnische Zeitschrift, vol. 27, n°11, novembre 1974, ULM, DE, pages 425-431) et "An FFT Based Technique for Suppressing Narrow-Band Interference in PN Spread Spectrum Communications Systems" (Di Pietro, International Conference on Acoustics, Speech and Signal Processing, 23-26 mai, 1989 ; IEEE New-York, 1989 ; Vol. 2, pages 1360-1363).

L'invention a notamment pour objectif de pallier l'inconvénient précité de l'état de la technique.

Plus précisément, l'invention a pour objectif de fournir un dispositif de démodulation cohérente d'un signal numérique entrelacé en temps et en fréquence, présentant un gain important par rapport à la démodulation différentielle, de l'ordre de 2 dB.

L'invention a donc pour objectif de fournir un tel dispositif, dans lequel l'influence du bruit est réduite, et donc les résultats de l'interpolation améliorés.

Un objectif particulier de l'invention est de fournir un tel dispositif, ne nécessitant qu'une adaptation simple et peu onéreuse des décodeurs connus, et utilisant des moyens de calcul et des informations déjà présents dans ces décodeurs.

Un autre objectif de l'invention est de fournir un tel dispositif, ne nécessitant pas d'adaptation du signal à émettre.

Le dispositif et le procédé de l'invention peuvent avantageusement être mis en oeuvre conjointement. Toutefois, ils sont indépendants, et peuvent être utilisés l'un sans l'autre.

Ces objectifs, ainsi que d'autres qui apparaîtront par la suite, sont atteints selon l'invention à l'aide d'un dispositif de démodulation cohérente selon la revendication 1.

De cette façon, les éléments de référence reçus avec une faible puissance, donc les éléments les plus perturbés par le bruit, ne sont pas pris en compte.

Avantageusement, lesdits moyens de seuillage tiennent compte pour le calcul dudit seuil de la valeur $\sigma^2$ de la puissance du bruit affectant ledit canal de transmission.

Dans un mode de réalisation préférentiel, ledit seuil a une valeur comprise entre 5 $\sigma$ et 6 $\sigma$.

De façon avantageuse lesdits moyens de seuillage tiennent également compte pour le calcul dudit seuil d'une estimation de la réponse impulsionnelle dudit canal de transmission.

Dans un mode de réalisation simplifié de l'invention, le seuil peut être fixe.

Préférentiellement, lesdits moyens de seuillage sont placés en amont desdits moyens de fenêtrage. Toutefois, ces moyens peuvent également être placés en aval.

De façon avantageuse, ladite transformation des échantillons reçus est une transformation de format égal au nombre M d'éléments de référence par symboles émis, ladite multiplication par une fenêtre temporelle réalisant simplement l'ajout d'une série de (N - M) zéros aux M éléments de référence transformés.

L'invention concerne également un procédé de démodulation cohérente selon la revendication 8.

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :

- la figure 1 présente un schéma synoptique des moyens de seuillage d'un dispositif de démodulation cohérente selon l'invention, mettant en oeuvre une transformation de Fourier et un seuillage des échantillons ;
- les figures 2A et 2B présentent respectivement deux exemples d'estimations théoriques de la réponse impulsionnelle du canal dans l'hypothèse où toutes les porteuses sont des porteuses de référence, et dans le cas de l'insertion d'une porteuse de référence toutes les R porteuses ;
- la figure 3 illustre un exemple d'estimation de la réponse impulsionnelle du canal obtenue en pratique, dans le cas d'un dispositif ne mettant pas en oeuvre les moyens de seuillage de l'invention ;
- la figure 4 est le schéma synoptique des moyens de seuillage d'un dispositif tel que représenté en figure 1, dans le cas ou le seuil dépend du niveau de bruit et de la réponse impulsionnelle du canal de transmission ;
- la figure 5 présente une comparaison des résultats obtenus dans le cas d'une démodulation différentielle et dans le cas de démodulations cohérentes avec un élément de référence sur quatre porteuses et un élément de référence sur huit porteuses.

Les différents aspects du mode de réalisation qui va être décrit ci-après concernent plus particulièrement la réception de radiodiffusion sonore numérique vers des mobiles.

Toutefois, il est clair que le principe du dispositif de démodulation cohérente de signaux numériques à haut débit de l'invention peut s'appliquer à tout type de récepteurs, dès lors que la diffusion des données se fait sous la forme de données numériques entrelacées en temps et en fréquence et que les données comprennent des éléments de référence.

Ce dispositif s'applique notamment, mais non exclusivement, à la réception de signaux émis selon le procédé décrit dans la demande de brevet FR 90 01491.

Dans l'application de radiodiffusion sonore numérique, un objectif peut être par exemple de transmettre seize programmes stéréophoniques dans une bande de fréquence de 8 MHz de largeur, avec un débit numérique de l'ordre de 250 kbits après compression par programme stéréophonique.

C'est notamment le cas du procédé de diffusion COFDM. Selon ce procédé, le signal émis est constitué par une suite de symboles de modulation formant un multiplex de N porteuses orthogonales.

Soit $\{f_k\}$ l'ensemble des fréquences porteuses considérées, avec :

$$f_k = k/t_s, \qquad k = 0 \text{ à } N\text{-}1$$

où $t_s$ représente la durée allouée à un symbole de modulation.

On peut alors définir la base de signaux élémentaires suivante :

$$\Psi_{j,k}(t) \text{ avec } k = 0 \text{ à } N\text{-}1, j = -\infty \text{ à } +\infty:$$

$$\Psi_{j,k}(t) = g_k(t - jt_s)$$

avec :

$$0 \le t < t_s \qquad : g_k(t) = e^{2i\pi f k t}$$
$$\text{ailleurs} \qquad : g_k(t) = 0$$

Soit d'autre part un ensemble de nombres complexes $\{C_{j,k}\}$ prenant ses valeurs dans un alphabet fini, représentant le signal de données émis.

Le signal OFDM associé s'écrit alors :

$$x(t) = \text{Re}\left[e^{2i\pi f0t}\left(\sum_{j=-\infty}^{+\infty} \sum_{k=0}^{N-1} C_{j,k}\ \Psi_{j,k}(t)\right)\right]$$

Pour s'affranchir de tout problème de sélectivité en fréquence du canal, un intervalle de garde de durée $\Delta$ est insérée devant chaque signal $\Psi_{j,k}(t)$, afin d'absorber le brouillage intersymboles.

$t_s$ représente désormais la durée du signal utile, $T_s = t_s + \Delta$, la durée du symbole, et $\Delta$ la durée de l'intervalle de garde.

On définit alors les signaux émis par la relation :

$$\Psi_{j,k}(t) = g_k(t\text{-}jT_s)$$

avec :

$$-\Delta \le t < t_s \qquad : g_k(t)\ e^{2i\pi f k t}$$
$$\text{ailleurs} \qquad : g_k(t) = 0$$

Le canal est modélisé par la relation :

$$Y_{j,k} = H_{j,k} \cdot C_{j,k} + N_{j,k}$$

où :

$H_{j,k}$      est la réponse complexe du canal à la fréquence $f_k$ et à l'instant $jT_s$ ;

$N_{j,k}$      est un bruit gaussien complexe ;

$Y_{j,k}$      est le symbole obtenu après projection du signal COFDM reçu sur chaque porteuse k et à chaque instant j.

De façon à permettre une démodulation cohérente, le dispositif de récupération de porteuse utilisé en démodulation cohérente doit pouvoir fournir une estimation de la réponse du canal :

$H_{j,k} = \rho_{j,k}\, e^{i\,\varphi_{j,k}}$ pour tous les instants j et toutes les fréquences k, où : $\rho_{j,k}$ est l'amplitude et $\varphi_{j,k}$ est la phase de la réponse du canal.

Une façon avantageuse de le mettre en oeuvre consiste à utiliser certaines porteuses judicieusement équi-réparties dans le domaine temps-fréquence, comme fréquences pilotes de référence de phase et d'amplitude. Ceci est tout à fait possible avec le système COFDM, du fait de la nature bidimensionnelle du signal émis.

Cela permet d'obtenir une estimation des $H_{j,k}$ pour certains instants et certaines fréquences correspondant à l'insertion de ces références.

L'estimation de la réponse du canal $H_{j,k}$ à tout instant $jT_s$ et pour toutes les fréquences $f_k$ est ensuite obtenue par filtrage d'interpolation.

Ce filtrage numérique peut être réalisé classiquement par un produit de convolution du signal d'entrée et de la réponse impulsionnelle du filtre. Chaque valeur de sortie est alors remplacée par la somme pondérée de ces voisins.

Il existe une autre façon avantageuse d'effectuer ce filtrage, qui utilise la propriété selon laquelle la Transformée de Fourier d'un produit de convolution est égale au produit des transformées. L'opération nécessite alors une Transformée de Fourier Discrète (TFD) directe (respectivement inverse), un fenêtrage (pondération) du signal que l'on veut interpoler, et une TFD inverse (respectivement directe).

L'invention concerne plus particulièrement cette seconde méthode. En effet, une des propriétés intéressantes de la TFD est que la transformée d'un produit de convolution est égale au produit des transformées. Il apparaît donc que le nombre d'opérations à effectuer par cette méthode est inférieur à celui nécessaire au filtrage RIF (filtre à réponse impulsionnelle finie), pour un rendement équivalent. Par ailleurs, elle n'impose que peu de modification des décodeurs, des moyens de calcul d'une TFD étant déjà présents.

L'insertion des porteuses de référence, à raison d'une référence toutes les R porteuses, permet au récepteur de disposer d'une estimation, entachée de bruit, de la réponse fréquentielle sous-échantillonnée du canal représentée par :

$$\bar{H}(\nu) \text{ pour } \nu = n.R \quad n : 0... \ (N-1)/R$$

avec : R - 1 : nombre de porteuses entre deux références

Il est donc nécessaire de déterminer le produit de convolution suivant, qui correspond au signal de sortie du filtrage de $\bar{H}(\nu)$ par un filtre à réponse impulsionnelle de support fini :

$$\hat{H}(k) = \sum_{\nu\,=\,0}^{N-1} H'(\nu)\,.\,F(k-\nu) \qquad\qquad (1)$$

avec

$H'(\nu) = H\,(\nu) \qquad$ si $\nu = n.R$
$H'(\nu) = 0 \qquad$ sinon
et

$F(k-\nu)$ : coefficients du filtre passe-bas d'interpolation.

Les N échantillons estimés $\hat{H}(k)$ sont obtenus par une somme pondérée des échantillons $\hat{H}(\nu)$ voisins.

Etant donnés les suites de N points $H'(\nu)$ (réponse du canal dans le domaine fréquentiel) et $F(\nu)$ (réponse du filtre dans le domaine fréquentiel), dont les Transformées de Fourier inverses sont respectivement $h'(n)$ et $f(n)$, la Transformée de la convolution circulaire (1) peut s'écrire :

$\hat{h}(n) = h'(n).f(n) \qquad$ avec
$\quad \hat{h}(n)$ TFD$^{-1}$ sur N points de $H(k)$
$\quad h'(n)$ TFD$^{-1}$ sur N points de $H'(k)$
$\quad f(n)$ TFD$^{-1}$ sur N points de $F(k)$

Cette méthode d'interpolation nécessitera donc les trois opérations successives suivantes :

- TFD inverse pour obtenir les $h'(n)$ et $f(n)$ à partir des $H'(k)$ et $F(k)$ (passage du domaine fréquentiel au domaine temporel).

- Produit de $h'(n)$ par $f(n)$.

- TFD directe pour obtenir les $\hat{H}(k)$ à partir des $\hat{h}(n)$ (passage du domaine temporel au domaine fréquentiel).

Il est souhaitable de choisir pour N une puissance de 2 afin de réaliser facilement les opérations de TFD.

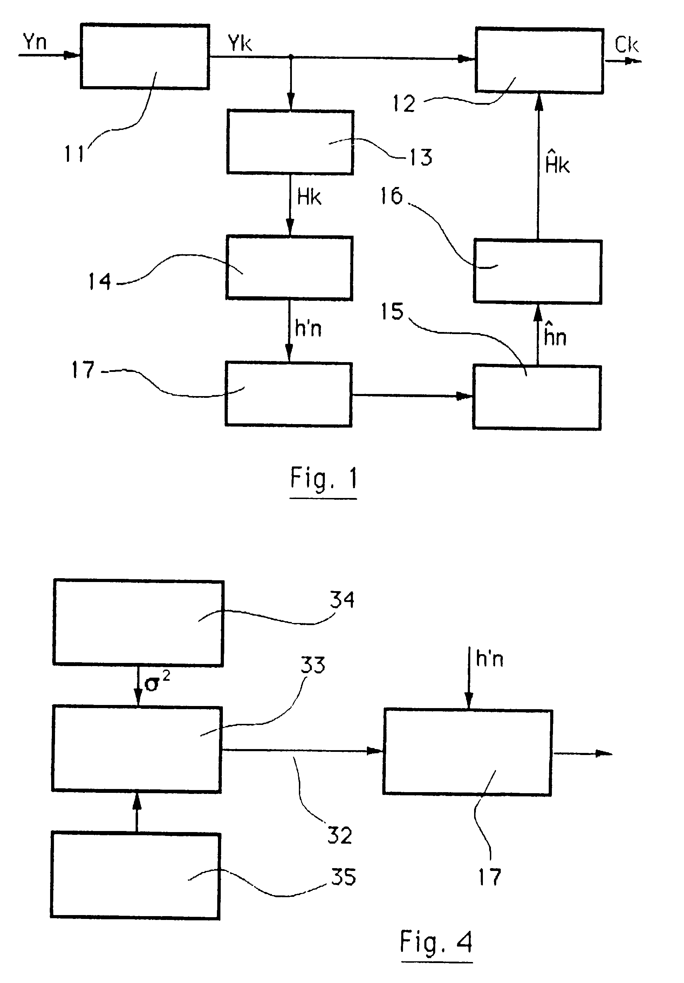

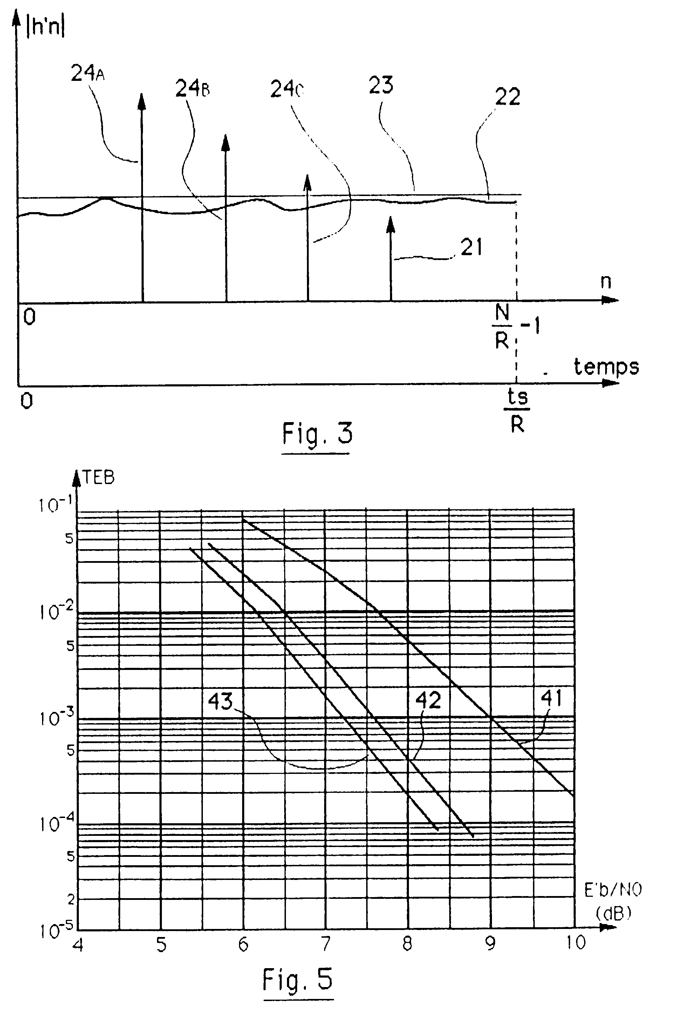

La figure 1 présente le schéma d'un dispositif de démodulation mettant en oeuvre de tels moyens d'estimation de la réponse du canal.

Le signal reçu échantillonné $y_n$ est démodulé de façon classique, par une transformation de Fourier discrète (TFD) 11, produisant, dans le domaine fréquentiel les échantillons : $Y_k = H_k . C_k + N_k$, k variant de 0 à N - 1.

Les échantillons définitifs $\hat{C}_k$ sont obtenus par projection, dans un module 12, des valeurs $Y_k$ sur les estimations $\hat{H}_k$ de la réponse fréquentielle du canal.

L'interpolation de cette réponse fréquentielle est obtenue de la façon suivante. Un module 13 réalise l'extraction des N/R échantillons $\tilde{H}_k$ ($\tilde{H}_0$, $\tilde{H}_r$, $\tilde{H}_{2r}$...$\tilde{H}_{n-r}$) correspondant aux éléments de référence de l'ensemble des échantillons $Y_k$, et l'insertion de (N - N/R) éléments objectifs nuls entre ces références, de façon à obtenir N éléments, selon la séquence suivante : $\tilde{H}_0$, 0, ...0, $\tilde{H}_r$, 0, ..., 0, $\tilde{H}_{n-r}$.

Par une transformation inverse 14 à N points, on obtient dans le domaine temporel les valeurs $h'_n$ correspondant à l'interpolation dans le domaine temporel du sous-échantillonnage $\tilde{H}_k$ de la réponse fréquentielle du canal. Plus précisément, la suite des N valeurs $h'_n$ obtenues après la TFD $^{-1}$ 14 constitue une estimation de la réponse impulsionnelle du canal.

Si on appelle h(n) la transformée inverse calculée sur N points de H(k), on montre que, en ne tenant pas compte du bruit, h'(n) obtenue à partir de la TFD inverse de H'(k) peut s'exprimer de la manière suivante :

$$h'(n) = h(n) + h(n + N/R) + h(n + (2N/R)) + ......h(n + (R - 1)N/R)$$

où les indices sont pris modulo N.

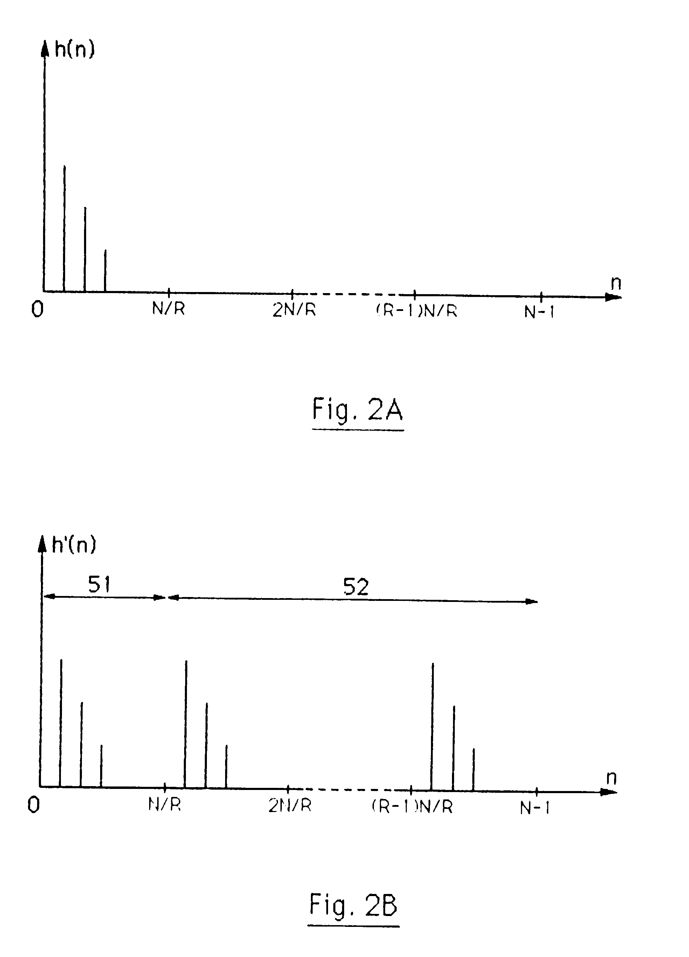

Les figures 2A et 2B présentent respectivement deux exemples d'estimations de la réponse impulsionnelle du canal h(n) (correspondant à l'hypothèse où toutes les porteuses sont des porteuses de référence), et h'(n) (correspondant à un sous-échantillonnage de la réponse fréquentielle du canal, c'est-à-dire à l'utilisation d'une porteuse de référence toutes les R porteuses).

Il apparaît clairement, en figure 2B, que l'insertion d'éléments objectifs nuls entre les éléments de référence entraîne une répétition de la réponse impulsionnelle. De façon à obtenir une estimation 51 correspondant à celle de la figure 2A, et donc éliminer la partie 52, il est nécessaire de fenêtrer temporellement.

On montre que l'estimation h'(n) de la réponse impulsionnelle du canal ne présente pas de recouvrement, si et seulement si l'étalement $\Delta\tau_{max}$ des différents échos vérifie :

$$\Delta\tau_{max} \leq NT/R = t_s/R$$

T : Période d'échantillonnage

Cela correspond au critère habituel de Shannon pour l'échantillonnage d'un signal, appliqué ici au cas particulier d'un signal complexe dont la Transformée de Fourier est dissymétrique.

Il est donc nécessaire d'appliquer une fenêtre f(n) 15 de pondération, définie par :

f(n) = 1          pour n : 0, ..., (N/R - 1)

f(n) = 0          pour n : N/R, ..., N - 1

Les N échantillons fournis par la fenêtre 15 sont ensuite transformés par une transformation de Fourier discrète 16 à N points, fournissant dans le domaine fréquentiel l'estimation $\hat{H}_k$ de la réponse du canal.

Dans un autre mode de réalisation, il est possible de ne pas insérer d'échantillons nuls parmi les échantillons $\tilde{H}_k$ extraits par le module 13 d'extraction.

Dans ce cas, le module 14 effectue une transformation de Fourier inverse seulement sur N/R points. Cette seconde solution présente l'avantage de nécessiter un nombre d'opérations moins important.

De plus, dans ce cas, le fenêtrage 15 correspond à un simple ajout aux N/R termes $h'_n$ d'une série de N - N/R échantillons nuls. L'application sur le signal $h'_n$ d'une fenêtre temporelle rectangulaire suivie de la TFD, peut être interprétée comme un échantillonnage parfait du signal (si les conditions de Shannon sont réunies) dans le domaine fréquentiel. En augmentant ainsi la durée de l'enregistrement, en le portant de N/R à N avec des échantillons complémentaires nuls, on obtient une analyse spectrale plus fine.

Selon les modes de réalisation, on peut choisir de limiter le nombre d'opérations, en adoptant cette seconde méthode, ou de privilégier l'utilisation d'un format de TFD standard, en mettant en oeuvre la première méthode présentée.

Enfin, il est clair que l'ordre des transformations TFD $^{-1}$ et TFD peut être inversé. Il est tout à fait possible que le module 14 effectue une transformation directe, et le module 16 une transformation inverse.

La figure 3 est un exemple d'estimation de la réponse impulsionnelle du canal, tel qu'on peut l'obtenir en pratique. On obtient ainsi un tableau de N/R valeurs complexes que l'on peut graduer en retard. Ce tableau comporte M raies distinctes auxquelles s'ajoute un bruit complexe Gaussien centré.

Cette estimation de la réponse du canal est donc fortement entachée de bruit ce qui nuit à la qualité de l'interpolation.

Aussi, si le gain en faveur de la démodulation cohérente par rapport à la démodulation différentielle est théoriquement de 3 dB lorsque la réponse du canal est estimée de manière parfaite, il n'est en pratique que de l'ordre de 0,5 dB.

Selon une caractéristique essentielle de l'invention, la réponse impulsionnelle du canal est traitée de façon à limiter l'influence du bruit. Il est ainsi prévu un module 17 du seuillage de cette réponse, assurant l'élimination systématique de tout échantillon au-dessous d'un certain seuil. Ainsi que cela est précisé par la suite, ce seuil peut être fixe ou adaptatif.

Il est clair en effet que toute raie 21 inférieure au niveau de bruit 22 est totalement inexploitable. L'invention propose donc de placer sur ce signal un seuil 23, éliminant tout signal dont le module est inférieur à ce seuil, et en particulier le bruit 22, et ne conservant donc que les raies utiles $24_A$, $24_B$, $24_C$.

Le seuillage est fait avantageusement avant l'opération de fenêtrage, notamment dans le cas de la seconde solution décrite. En effet, il y a alors moins d'échantillons à traiter. Toutefois, il peut également être réalisé entre les opérations de fenêtrage et de transformation directe.

Ce procédé s'avère particulièrement performant avec des signaux du type des signaux COFDM. En effet, l'information utile se trouve répartie sur un nombre relativement réduit de raies. Elle est donc en très grande majorité au-dessus du seuil, et est conservée. En revanche, l'essentiel du bruit est éliminé.

Avantageusement, on choisit un seuil variable, notamment en fonction du niveau de bruit.

La figure 4 présente un schéma synoptique de tels moyens de seuillage, selon un mode de réalisation préférentiel de l'invention.

Le seuillage 17 est donc effectué sur les échantillons $h'_n$, en fonction d'un seuil variable 32. Un module 33 de calcul détermine la valeur du seuil, en tenant compte de l'estimation $\sigma^2$ de la puissance du bruit fournit par un module 34 d'estimation.

Il est à noter que, dans les décodeurs COFDM, cette information $\sigma^2$ est déjà disponible. Le dispositif de l'invention ne nécessite donc pas d'importants moyens de traitement, mais exploite au contraire les moyens et les informations présents dans chaque décodeur, qu'il s'agisse du calcul de la TFD ou de l'estimation de $\sigma^2$.

Cette estimation peut par exemple être obtenue selon le procédé décrit dans le brevet FR 88 15216, déposé le 18.11.88 au nom des mêmes déposants, qui consiste à profiter de l'absence de signal pendant un temps de symbole, pour effectuer une analyse spectrale du bruit.

On a pu constater que, dans les exemples de mise en oeuvre présentés plus loin, le seuil optimal se situe entre $5\sigma$ et $6\sigma$, $\sigma$ étant l'écart-type du bruit.

Le module 33 de calcul du seuil peut également tenir compte d'une estimation de la réponse impulsionnelle du canal, et en particulier du nombre de raies significatives. En effet, plus il y a de raies, plus la puissance est répartie. Cette information est fournie par un module 35 d'estimation de la réponse impulsionnelle. A nouveau, le module 35 est déjà présent dans les décodeurs COFDM, et utilisé pour la synchronisation.

Le module 17 de seuillage peut par exemple être un comparateur, ou un circuit de polarisation.

De nombreuses autres configurations peuvent bien sûr être mises en oeuvre. Ainsi, on peut adjoindre aux moyens décrits un module de décision, ne mettant en oeuvre le seuillage que si le seuil dépasse une certaine valeur de référence.

Il est également possible de choisir un seuil fixe, non adaptatif, qui peut alors être égal à environ 5 fois un "$\sigma$ critique" $\sigma_s$. Dans ce cas, $\sigma_s$ peut par exemple caractériser une puissance de bruit correspondant à un TEB d'environ $10^{-4}$.

On présente ci-dessous quelques résultats numériques obtenus avec un dispositif selon l'invention, en relation avec la figure 5.

Dans cet exemple, on utilise la technique de modulation COFDM. Le nombre de porteuses N du multiplex est 512. Chaque symbole de longueur $T_s = 80$ μs à une durée utile $t_s = 64$ μs. Chaque porteuse est modulée en modulation de phase à 4 états.

On sait que si on utilise une référence toutes les R porteuses, l'information sur la réponse du canal sera préservée tant que $\Delta\tau$ max $< t_s/R$, où $\Delta\tau$ max est l'étalement maximum de la réponse impulsionnelle du canal.

Cette réponse impulsionnelle peut être modélisée par une distribution exponentielle de la forme :

$$P(\tau) = \frac{1}{\tau_0} \, e^{-\tau/\tau 0}$$

pour $\tau \geq 0$

avec $\tau_0$ : moyenne et écart-type des retards.

La figure 5 compare trois types de démodulation :

- démodulation différentielle 41 ;
- démodulation cohérente avec une référence sur 4 porteuses 42 ;
- démodulation cohérente avec une référence sur 8 porteuses 43 ; pour un écart-type des retards $\tau_0$ égal à 1 µs.

Ces courbes tiennent compte de la perte en efficacité en puissance (10 log 1/R) due à l'insertion des porteuses de référence (courbe paramétrée en Energie par bit utile sur $N_0$).

On constate donc qu'on obtient, à l'aide du dispositif de l'invention un gain compris entre 1,6 dB (pour R = 4) et 2 dB (pour R = 8) par rapport à la démodulation différentielle.

En d'autres termes, le traitement vis à vis du bruit de l'estimation de la réponse impulsionnelle du canal avant interpolation, permet de se situer à environ 1 dB de la courbe obtenue en démodulation cohérente avec une estimation du canal parfaite.

Il est clair que le dispositif de l'invention présente encore un intérêt plus important lorsque le nombre d'états de constellation croît.

## Revendications

1. Dispositif de démodulation cohérente d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,

   ledit signal numérique (HK) comprenant des éléments de référence, de valeur et de position dans ledit espace temps-fréquence connues dudit dispositif de démodulation,

   ledit dispositif comprenant :

   - des moyens (11) de transformation mathématique transposant un signal reçu dans le domaine temporel ($y_n$) en un signal à démoduler dans le domaine fréquentiel ($y_k$);
   - des moyens (12) de démodulation cohérente dudit signal à démoduler ($y_k$), par projection de ce dernier sur une estimation ($\hat{H}_k$) de la réponse fréquentielle du canal de transmission ;

   caractérisé en ce que ladite estimation ($\hat{H}_k$) de la réponse fréquentielle est délivrée par des moyens d'estimation comprenant :

   - des moyens (13) d'extraction desdits éléments de référence ($H_k$) dans ledit signal à démoduler ($y_k$) ;
   - des moyens de transformation de Fourier (14) transposant lesdits éléments de référence du domaine fréquentiel dans le domaine temporel ;
   - des moyens (15) d'application d'une fenêtre temporelle ($f_n$) sur lesdits éléments de référence transposés ;
   - des moyens de seuillage (17), insérés avant ou après lesdits moyens (15) d'application d'une fenêtre temporelle, et assurant l'élimination systématique, dans le domaine temporel, des éléments de référence transposés inférieurs à un certain seuil ;
   - des moyens de transformation inverse (16) desdits éléments de référence transposés, du domaine temporel vers le domaine fréquentiel, délivrant ladite estimation ($\hat{H}_k$) de la réponse fréquentielle du canal.

2. Dispositif selon la revendication 1, caractérisé en ce que lesdits moyens de seuillage tiennent compte pour le calcul dudit seuil de la valeur $\sigma^2$ de la puissance du bruit affectant ledit canal de transmission.

3. Dispositif selon la revendication 2, caractérisé en ce que ledit seuil a une valeur comprise entre 5 $\sigma$ et 6 $\sigma$.

4. Dispositif selon l'une quelconque des revendications 1 à 3, caractérisé en ce que lesdits moyens (17) de seuillage tiennent compte pour le calcul dudit seuil d'une estimation de la réponse impulsionnelle dudit canal de transmission.

5. Dispositif selon la revendication 1, caractérisé en ce que ledit seuil est fixe.

6. Dispositif selon l'une quelconque des revendications 1 à 5, caractérisé en ce que lesdits moyens (17) de seuillage sont placés en amont desdits moyens (15) de fenêtrage.

**7.** Dispositif selon l'une quelconque des revendications 1 à 6, caractérisé en ce que ladite transformation (14) des échantillons reçus est une transformation de format égal au nombre M d'éléments de référence par symboles émis, et en ce que ladite multiplication (15) par une fenêtre temporelle réalise simplement l'ajout d'une série de (N - M) zéros aux M éléments de référence transformés.

**8.** Procédé de démodulation cohérente d'un signal numérique du type constitué d'éléments numériques répartis dans l'espace temps-fréquence et émis sous la forme de symboles constitués d'un multiplex de N fréquences porteuses orthogonales modulées par un jeu desdits éléments numériques et diffusées simultanément,
ledit signal numérique comprenant des éléments de référence, de valeur et de position dans ledit espace temps-fréquence connues dudit dispositif de démodulation,
ledit procédé comprenant les étapes suivantes :

- transformation mathématique transposant un signal reçu dans le domaine temporel ($y_n$) en un signal à démoduler dans le domaine fréquentiel ($y_k$) ;
- démodulation cohérente dudit signal à démoduler ($y_k$), par projection de ce dernier sur une estimation ($\hat{H}_k$) de la réponse fréquentielle du canal de transmission ;

caractérisé en ce qu'il comprend une étape d'estimation de la réponse fréquentielle du canal comprenant les étapes suivantes :

- extraction desdits éléments de référence ($H_k$) dans ledit signal à démoduler ($Y_k$) ;
- transformation de Fourier (14) transposant lesdits éléments de référence du domaine fréquentiel dans le domaine temporel ;
- application d'une fenêtre temporelle ($f_n$) sur lesdits éléments de référence transposés ;
- seuillage (17), avant ou après ladite application d'une fenêtre temporelle, et assurant l'élimination systématique, dans le domaine temporel, des éléments de référence transposés inférieurs à un certain seuil ;
- transformation inverse (16) desdits éléments de référence transposés, du domaine temporel vers le domaine fréquentiel, délivrant ladite estimation ($\hat{H}_k$) de la réponse fréquentielle du canal.

**Patentansprüche**

**1.** Vorrichtung zur kohärenten Demodulation eines digitalen Signals von der Art, die aus im Zeit-Frequenz-Raum verteilten digitalen Elementen besteht und in der Form von Symbolen gesendet wird, die aus einem Multiplex von N orthogonalen Trägerfrequenzen besteht, welche durch einen Satz der oben erwähnten digitalen Elemente moduliert und gleichzeitig gesendet werden,
wobei das digitale Signal ($H_k$) Referenzwerte umfaßt, deren Wert und Position im Zeit-Frequenz-Raum der Demodulationsvorrichtung bekannt sind, wobei die Vorrichtung über folgendes verfügt:

- mathematische Transformationsmittel (11), die ein im Zeitbereich ($y_n$) empfangenes Signal in ein im Frequenzbereich ($y_k$) zu demodulierendes Signal transformieren;
- kohärente Demodulationsmittel (12) des zu demodulierenden Signals ($y_k$), durch Projektion des letzteren auf eine Schätzung ($\hat{H}_k$) der Frequenzantwort des Übertragungskanals,

dadurch gekennzeichnet, daß die Schätzung ($\hat{H}_k$) der Frequenzanwort durch Schätzmittel gegeben wird, die folgendes umfassen:

- Mittel (13) zum Extrahieren dieser Referenzelemente ($H_k$) aus dem zu demodulierenden Signal ($y_k$);
- Mittel zur Fouriertransformation (14), welche die Referenzelemente aus dem Frequenzbereich in den Zeitbereich transformieren;
- Mittel (15) zum Anwenden eines Zeitfensters ($f_n$) auf die transformierten Referenzelemente;
- Mittel zum Bilden eines Schwellenwertes (17), die vor oder nach den Mitteln (15) zum Anwenden eines Zeitfensters eingefügt werden und welche im Zeitbereich das systematische Eliminieren aller transformierten Referenzelemente sicherstellt, deren Wert unterhalb eines gegebenen Schwellenwertes liegt;
- Mittel zur Umkehrtransformation (16) dieser transformierten Referenzelemente aus dem Zeitbereich in den Frequenzbereich, welche die Schätzung ($\hat{H}_k$) der Frequenzantwort des Kanals liefern.

**2.** Vorrichtung gemäß Anspruch 1,

dadurch gekennzeichnet, daß die Mittel zum Bilden eines Schwellenwertes bei der Berechnung dieses Schwellenwertes den Wert $\sigma^2$ der Rauschleistung berücksichtigen, mit dem der Übertragungskanal behaftet ist.

3. Vorrichtung gemäß Anspruch 2,
dadurch gekennzeichnet, daß der Schwellenwert zwischen 5 σ und 6 σ liegt.

4. Vorrichtung gemäß einem der Ansprüche 1 bis 3,
dadurch gekennzeichnet, daß die Mittel (17) zum Bilden eines Schwellenwertes bei der Berechnung dieses Schwellenwertes eine Schätzung der impulsmäßigen Antwort des Übertragungskanals berücksichtigen.

5. Vorrichtung gemäß Anspruch 1,
dadurch gekennzeichnet, daß der Schwellenwert fest ist.

6. Vorrichtung gemäß einem der Ansprüche 1 bis 5,
dadurch gekennzeichnet, daß die Mittel (17) zum Bilden eines Schwellenwertes vor den Mitteln (15) zum Anwenden eines Zeitfensters angeordnet sind.

7. Vorrichtung gemäß einem der Ansprüche 1 bis 6,
dadurch gekennzeichnet, daß es sich bei der Transformation (14) der empfangenen abgetasteten Werte um eine Transformation handelt, deren Format der Zahl M der Referenzelemente je gesendeten Signals gleicht und daß die Multiplikation (15) mit einem Zeitfenster lediglich das Hinzufügen einer Reihe von (N - M) Nullen an die M transformierten Referenzelemente bewirkt.

8. Verfahren zur kohärenten Demodulation eines digitalen Signals von der Art, welche aus im Zeit-Frequenz-Raum verteilten digitalen Elementen besteht und in der Form von Symbolen gesendet wird, die aus einem Multiplex von N orthogonalen Trägerfrequenzen besteht, welche durch einen Satz der oben erwähnten digitalen Elemente moduliert und gleichzeitig gesendet werden,
wobei das digitale Signal Referenzwerte umfaßt, deren Wert und Position im Zeit-Frequenz-Raum der Demodulationsvorrichtung bekannt sind, wobei das Verfahren die folgenden Schritte umfaßt:

- eine mathematische Transformation, die ein im Zeitbereich empfangenes Signal ($y_n$) in ein Signal transformiert, das im Frequenzbereich ($y_k$) demoduliert werden muß;
- eine kohärente Demodulation des zu demodulierenden Signals ($y_k$) durch Projektion des letzteren auf eine Schätzung ($^{\wedge}H_k$) der Frequenzantwort des Übertragungskanals;

dadurch gekennzeichnet, daß es einen Schritt zum Schätzen der Frequenzanwort des Kanals umfaßt, mit den folgenden Schritten:

- Extraktion der Referenzelemente ($H_k$) aus dem zu demodulierenden Signal ($y_k$);
- Fouriertransformation (14), welche die Referenzelemente des Frequenzbereiches in den Zeitbereich transformiert;
- Anwendung eines Zeitfensters ($f_n$) auf die transformierten Referenzelemente;
- Schwellenwertbildung (17) vor oder nach der Anwendung eines Zeitfensters, welche im Zeitbereich das systematische Eliminieren aller transformierten Referenzelemente sicherstellt, deren Wert geringer als ein gegebener Schwellenwert ist;
- Umkehrtransformation (16) der transformierten Referenzelemente vom Zeitbereich zum Frequenzbereich, welche die Schätzung ($^{\wedge}H_k$) der Frequenzantwort des Kanals liefert.

## Claims

1. Device for coherent demodulation of a digital signal of the type comprising digital elements distributed in the time-frequency space and transmitted in the form of symbols made up of a multiplex of N orthogonal carrier frequencies modulated by a set of the said digital elements and broadcast simultaneously,
the said digital signal (HK) containing reference elements having a value and position in the said time-frequency space that are known to the said demodulation device, the said device comprising:

- mathematical transform means (11) transforming a signal received in the time domain ($y_n$) into a signal to be

demodulated in the frequency domain ($y_k$);

- means (12) for coherent demodulation of the said signal to be demodulated ($y_k$) by projection of the latter on an estimation ($\hat{H}_k$) of the frequency response of the transmission channel;

characterised in that the said estimation ($\hat{H}_k$) of the frequency response is supplied by estimating means comprising:

- means (13) for extraction of the said reference elements ($H_k$) from the said signal to be demodulated ($y_k$);
- Fourier transform means (14) transferring the said reference elements from the frequency domain to the time domain;
- means (15) for applying a time window ($f_n$) to the said reference elements transferred;
- threshold means (17) inserted before or after the said means (15) for applying a time window, and ensuring the systematic elimination, from the time domain, of transferred reference elements that are below a certain threshold;
- means for reverse transformation (16) of the said transferred reference elements from the time domain to the frequency domain, providing the said estimation ($\hat{H}_k$) of the frequency response of the channel.

2. Device according to Claim 1, characterised in that the said threshold means take account of the value $\sigma^2$ of the power of the noise affecting the said transmission channel for computation of the said threshold.

3. Device according to Claim 2, characterised in that the said threshold has a value of between $5\sigma$ and $6\sigma$.

4. Device according to any one of Claims 1 to 3, characterised in that the said threshold means (17) take account of an estimation of the pulse response of the said transmission channel for computation of the said threshold.

5. Device according to Claim 1, characterised in that the said threshold is fixed.

6. Device according to any one of Claims 1 to 5, characterised in that the said threshold means (17) are positioned upstream of the said windowing means (15).

7. Device according to any one of Claims 1 to 6, characterised in that the said transform (14) of samples received is a transform of format equal to the number M of reference elements per symbols transmitted and in that the said multiplication (15) by a time window simply embodies the addition of a series of (N - M) zeros to the M reference elements transformed.

8. Method for coherent demodulation of a digital signal of the type comprising digital elements distributed in the time-frequency space and transmitted in the form of symbols made up of a multiplex of N orthogonal carrier frequencies modulated by a set of the said digital elements and broadcast simultaneously,
the said digital signal containing reference elements having a value and position in the said time-frequency space that are known to the said demodulation device,
the said method comprising the following steps:

- mathematical transformation transforming a signal received in the time domain ($y_n$) into a signal to be demodulated in the frequency domain ($y_k$);
- coherent demodulation of the said signal to be demodulated ($y_k$) by projection of the latter on an estimation ($\hat{H}_k$) of the frequency response of the transmission channel;

characterised in that it comprises a step for estimating the frequency response of the channel, comprising the following steps:

- extraction of the said reference elements ($H_k$) from the said signal to be demodulated ($y_k$);
- Fourier transform (14) transferring the said reference elements from the frequency domain to the time domain;
- application of a time window ($f_n$) to the said reference elements transferred;
- thresholding (17), before or after the said application of a time window, and ensuring the systematic elimination, from the time domain, of transferred reference elements that are below a certain threshold;
- reverse transformation (16) of the said transferred reference elements from the time domain to the frequency domain, providing the said estimation ($\hat{H}_k$) of the frequency response of the channel.

Fig. 1

Fig. 4

Fig. 3

Fig. 5

Fig. 2A

Fig. 2B